# EUROPÄISCHE PATENTSCHRIFT

(11) **EP 3 189 990 B1**
(45) Veröffentlichungstag und Bekanntmachung des Hinweises auf die Patenterteilung: **25.09.2019**
(21) Anmeldenummer: 16174168.1
(22) Anmeldetag: 13.06.2016
(51) Int. Cl.: B60G 7/00

(54) **VERSTÄRKUNGSELEMENT ZUR ENTLASTUNG EINES ACHSSCHENKELS IN EINEM KRAFTFAHRZEUG UND RADAUFHÄNGUNG**
REINFORCING ELEMENT FOR RELIEF OF A WHEEL KNUCKLE IN A MOTOR VEHICLE AND WHEEL SUSPENSION
ÉLEMENT DE RENFORCEMENT DESTINE A SOULAGER UNE FUSEE D'ESSIEU DANS UN VEHICULE AUTOMOBILE ET SUSPENSION

(30) Priorität: 23.11.2015 DE 202015106373 U
(43) Veröffentlichungstag der Anmeldung: 12.07.2017
(73) Patentinhaber: dipsales GmbH, 13599 Berlin (DE)
(72) Erfinder: Jeffries, Simon, 12203 Berlin (DE); Ropers, Willfried, 27619 Schiffdorf (DE)
(74) Vertreter: Prinz & Partner mbB

(56) Entgegenhaltungen:
- EP-A1- 1 512 610
- DE-A1- 4 331 976
- DE-A1-102012 021 289
- DE-A1-102014 201 091
- GB-A- 2 509 245
- JP-A- H10 278 527
- US-A- 4 761 019
- US-A1- 2006 054 423

## Beschreibung

Die Erfindung betrifft ein Verstärkungselement zur Entlastung eines Achsschenkels, der über einen unteren Querlenker, an dem ein Stoßdämpfer mit einer Schraubenfeder angeordnet ist, und über einen oberen Querlenker mit einem Kraftfahrzeug verbunden ist, sowie eine entsprechende Radaufhängung eines Kraftfahrzeugs.

Achsschenkel, die über einen unteren Querlenker, an dem ein Stoßdämpfer mit einer Schraubenfeder angeordnet ist, und über einen oberen Querlenker in Kraftfahrzeugen verbunden sind, sind hohen Belastungen ausgesetzt und werden deshalb für die Aufnahme großer Kräfte ausgelegt. Bei verschiedenen Einsatzgebieten, wie beispielsweise anspruchsvoller Geländebetrieb oder im Motorsport, sowie bei hohen Achslasten, wie beispielsweise bei gepanzerten Kraftfahrzeugen, können die Belastungen so groß werden, dass zusätzliche Maßnahmen erforderlich sind, um ein Versagen der Achsschenkel zu verhindern.

Hierzu wurden bisher am Achsschenkel, der über einen unteren Querlenker, an dem ein Stoßdämpfer mit einer Schraubenfeder angeordnet ist, und über einen oberen Querlenker mit einem Kraftfahrzeug verbunden ist, Verstärkungselemente angeschweißt, um den Achsschenkel zu entlasten. Das Schweißen kann jedoch lokale Veränderungen in der Werkstoffstruktur verursachen, die den Achsschenkel schädigen und schwächen können. Zusätzlich ist das Anschweißen der Verstärkungselemente ein schwieriges Verfahren, das viel Erfahrung und eine hohe Kunstfertigkeit erfordert, wodurch eine korrekte Montage Fachleuten vorbehalten ist.

US-A-4761019 zeigt eine Doppel-Querlenker Radaufhängung, wobei der Achsschenkel durch die Montage von den Kugelgelenken verstärkt wird.

JP H10 278527 befasst sich mit MacPherson-Federbeinen sowie entsprechend geführten Radaufhängungen, wobei das Federbein über ein entsprechendes Verstärkungselement verstärkt wird. Das Verstärkungselement ist einerseits am Achsschenkel und andererseits am Zylinder des Federbeins befestigt. Eine solche Verstärkung führt allerdings nicht zu einer Entlastung des Achsschenkels, da der erhöhte Energieeintrag, wie z. B. durch extreme Fahrweisen oder erhöhtes Fahrzeuggewicht, direkt über das Federbein und hier insbesondere über die Kolbenstange ausgeglichen werden muss.

Aufgabe der Erfindung ist es, ein Verstärkungselement zur Entlastung eines Achsschenkels, der über einen unteren Querlenker, an dem ein Stoßdämpfer mit einer Schraubenfeder angeordnet ist, und über einen oberen Querlenker mit einem Kraftfahrzeug verbunden ist, bereitzustellen, das den Achsschenkel nicht schädigt und das eine einfache Montage ohne Modifikation vorhandener Teile ermöglicht.

Zur Lösung der Aufgabe ist ein erfindungsgemäßes Verstärkungselement zur Entlastung eines Achsschenkels, der über einen unteren Querlenker, an dem ein Stoßdämpfer mit einer Schraubenfeder angeordnet ist, und über einen oberen Querlenker mit einem Fahrzeug verbunden ist, vorgesehen, wobei das Verstärkungselement Befestigungspunkte aufweist, die zur Befestigung des Verstärkungselements an vorhandenen Befestigungselementen im Kraftfahrzeug vorgesehen sind, wobei die Befestigungspunkte Durchgangslöcher aufweisen, die für die Befestigung des Verstärkungselements mittels Befestigungsmittel, insbesondere Schrauben vorgesehen sind, und wobei das Verstärkungselement am unteren Abschnitt mit einer Montagefläche an einem Bremssattel anordenbar ist und an seinen dort vorgesehenen Befestigungspunkten mittels der ein oder mehreren Befestigungsmittel, insbesondere Schrauben an diesem befestigbar ist. Indem Befestigungselemente, wie beispielsweise Bohrungen, Schrauben und Befestigungsbolzen, die an verschiedenen Fahrzeugteilen bereits vorhanden sind, zur Befestigung des erfindungsgemäßen Verstärkungselements genutzt werden, ist es möglich das Kraftfahrzeug mit dem Verstärkungselement ohne Änderungen an den vorhandenen Fahrzeugteilen nachzurüsten. Auf diese Weise sind erfindungsgemäß auch keine aufwändigen Montageschritte, wie etwa Schweißen, notwendig, womit die Montage vereinfacht wird und eine Schädigung vorhandener Fahrzeugteile ausgeschlossen ist.

Gemäß einer bevorzugten Ausführungsform besteht das erfindungsgemäße Verstärkungselement aus Metall, insbesondere Stahl. Dieser Werkstoff eignet sich aufgrund seiner vorteilhaften mechanischen Eigenschaften und ist relativ günstig im Preis sowie einfach zu verarbeiten, wodurch sich aus ökonomischer Sicht weitere Vorteile bieten.

Vorzugsweise umfasst das erfindungsgemäße Verstärkungselement einen unteren Abschnitt, einen oberen Abschnitt und einen Kopfabschnitt, die stoffschlüssig miteinander verbunden, insbesondere verschweißt, sind. Ferner umfasst das erfindungsgemäße Verstärkungselement ein Verschlusselement, das mit dem oberen Abschnitt und dem Kopfabschnitt verbunden, insbesondere verschraubt, ist. Dieser Aufbau erlaubt eine kostengünstige Fertigung des Verstärkungselements sowie eine individuelle Gestaltung für verschiedene Fahrzeugtypen.

Der Kopfabschnitt wird vorzugsweise als Frästeil gefertigt, da so die funktionsbestimmende Form des Kopfabschnitts kostengünstig hergestellt werden kann.

Bevorzugt sind der untere Abschnitt und der obere Abschnitt geschnittene Flachteile. Diese Bauteile lassen sich einfach aus Blechen schneiden, beispielsweise mittels Wasserstrahlschneiden, wodurch eine hohe Güte und geringe Fertigungskosten erzielt werden.

Gemäß einer bevorzugten Ausführungsform sind der untere Abschnitt und der obere Abschnitt des erfindungsgemäßen Verstärkungselements in einem rechten Winkel zueinander angeordnet. Ferner bevorzugt weist der obere Abschnitt einen Stützabschnitt auf, an dem der untere Abschnitt anliegt. Durch die senkrechte Anordnung des oberen und unteren Abschnitts kann die Steifigkeit des Verstärkungselements erhöht werden. Der Stützabschnitt bietet eine Anlagefläche für den unteren Abschnitt, wodurch die Verbindungsstelle eine höhere Festigkeit und der untere Abschnitt eine höhere Biegefestigkeit aufweisen kann.

Gemäß der vorliegenden Erfindung weisen die Befestigungspunkte Durchgangslöcher auf, die für die Befestigung des erfindungsgemäßen Verstärkungselements mittels Befestigungsmittel, insbesondere Schrauben, vorgesehen sind. Indem Durchgangslöcher im Bereich der Befestigungspunkte des erfindungsgemäßen Verstärkungselements vorgehen sind, lässt sich dieses einfach mit den an verschiedenen Fahrzeugteilen vorhandenen Befestigungselementen verbinden. Schrauben stellen hierbei eine besonders belastbare und sichere Verbindung dar.

Das erfindungsgemäße Verstärkungselement ist vorzugsweise fahrzeugtypspezifisch und zusätzlich oder alternativ seitenspezifisch gestaltet. Auf diese Weise kann das Verstärkungselement spezifisch an die individuellen Anforderungen der verschiedenen Fahrzeugtypen beziehungsweise Einbaustellen angepasst werden, wodurch eine optimale Funktion des Verstärkungselements sichergestellt ist.

Es ist zusätzlich von Vorteil, wenn ein Code vorgesehen ist, der eine eindeutige Identifizierung des Verstärkungselements ermöglicht. Nicht nur lassen sich so die einzelnen erfindungsgemäßen Verstärkungselemente den jeweiligen Fahrzeugtypen zuordnen, sondern gerade bei verschiedenen Verstärkungselementen für einen bestimmten Fahrzeugtyp kann der Code genutzt werden, um die erfindungsgemäßen Verstärkungselemente der richtigen Fahrzeugseite und Einbaustelle zuzuordnen.

Gemäß einer vorteilhaften Ausführungsform ist am erfindungsgemäßen Verstärkungselement zusätzlich eine Befestigung zur Führung einer Bremsleitung vorgesehen. Auf diese Weise kann die Bremsleitung am Verstärkungselement sicher geführt und eine Schädigung der Bremsleitung vermieden werden.

Die Merkmale des erfindungsgemäßen Verstärkungselements, die Teil der nachfolgenden Beschreibung der erfindungsgemäßen Radaufhängung sind, sind auch als Teil der Beschreibung des erfindungsgemäßen Verstärkungselements selbst anzusehen.

Erfindungsgemäß ist zur Lösung der oben genannten Aufgabe auch eine erfindungsgemäße Radaufhängung eines Kraftfahrzeugs mit einem erfindungsgemäßen Verstärkungselement vorgesehen. Die erfindungsgemäße Radaufhängung umfasst einen Achsschenkel, der über einen unteren Querlenker, an dem ein Stoßdämpfer mit einer Schraubenfeder angeordnet ist, und über einen oberen Querlenker mit dem Kraftfahrzeug verbunden ist, einen Bremssattel und ein Traggelenk, wobei das Verstärkungselement derart befestigt ist, dass es den Achsschenkel entlastet, und wobei das Verstärkungselement an einer dem Bremssattel zugeordneten Montagefläche ein, zwei, drei oder mehr, vorzugsweise zwei Befestigungspunkte aufweist, wobei das Verstärkungselement mittels geeigneter Befestigungsmittel, vorzugsweise Schrauben am Bremssattel befestigt ist. Der Bremssattel ist aufgrund seiner Anordnung in der erfindungsgemäßen Radaufhängung besonders für die untere Befestigung des erfindungsgemäßen Verstärkungselements geeignet. Zusätzlich ist der Bremssattel selbst mit Schrauben an der Radaufhängung befestigt und bietet daher ideale Befestigungselemente für die Befestigung des erfindungsgemäßen Verstärkungselements. Indem vorzugsweise mindestens zwei Befestigungspunkte verwendet werden, wird eine stabile und drehsichere Befestigung des erfindungsgemäßen Verstärkungselementes sichergestellt.

In einer weiteren bevorzugten Ausführungsform der erfindungsgemäßen mindestens einen Befestigungspunkt am Kopfabschnitt auf, an dem das erfindungsgemäße Verstärkungselement mit einem geeigneten Befestigungsmittel, vorzugsweise einer Mutter am Traggelenk befestigt werden kann. Das Traggelenk ist - im eingebauten Zustand - am oberen Ende des Achsschenkels angeordnet. Auf diese Weise wird eine geeignete obere Befestigung des erfindungsgemäßen Verstärkungselements gewährleistet

Vorzugsweise ist das Verstärkungselement mittels einer Spezialmutter am Traggelenk befestigt ist. Die Spezialmutter kompensiert den zusätzlichen Aufbau durch das Verstärkungselement, indem ein Gewindeabschnitt der Spezialmutter in das Verstärkungselement hinein ragt. Hierdurch wird eine direkte Befestigung am Traggelenk, ohne Modifikation vorhandener Teile ermöglicht.

Sofern die erfindungsgemäße Radaufhängung zusätzlich eine Stabilisatoranlenkung umfasst, kann das erfindungsgemäße Verstärkungselement zusätzlich oder alternativ mindestens einen Befestigungspunkt für die Stabilisatoranlenkung aufweisen, wobei das erfindungsgemäße Verstärkungselement mittels eines geeigneten Befestigungsmittels, vorzugsweise einer oder mehrerer Schrauben an der Stabilisatoranlenkung befestigt ist. Die Stabilisatoranlenkung stellt eine weitere geeignete Option zur Befestigung des erfindungsgemäßen Verstärkungselements dar. Indem das erfindungsgemäße Verstärkungselement mit der Stabilisatoranlenkung verschraubt ist, wird eine zusätzliche, sichere Befestigung des Verstärkungselements erreicht. Eine solche Befestigung an der Stabilisatoranlenkung ist jedoch nicht verpflichtend.

Weitere Vorteile und Merkmale ergeben sich aus der nachfolgenden Beschreibung in Verbindung mit den beigefügten Zeichnungen. In diesen zeigen:
- Figur 1 ein erfindungsgemäßes Verstärkungselement in einer Seitenansicht von rechts,
- Figur 2 das erfindungsgemäße Verstärkungselement aus Figur 1 in einer Draufsicht,
- Figur 3 das erfindungsgemäße Verstärkungselement aus Figur 1 in einer Seitenansicht von links,
- Figur 4 das erfindungsgemäße Verstärkungselement aus Figur 1 in einer Vorderansicht,
- Figur 5 in einer schematischen Darstellung eine erfindungsgemäße Radaufhängung, und
- Figur 6 in einer Schnittansicht eine Detailaufnahme einer oberen Befestigung eines erfindungsgemäßen Verstärkungselements in einer erfindungsgemäßen Radaufhängung.

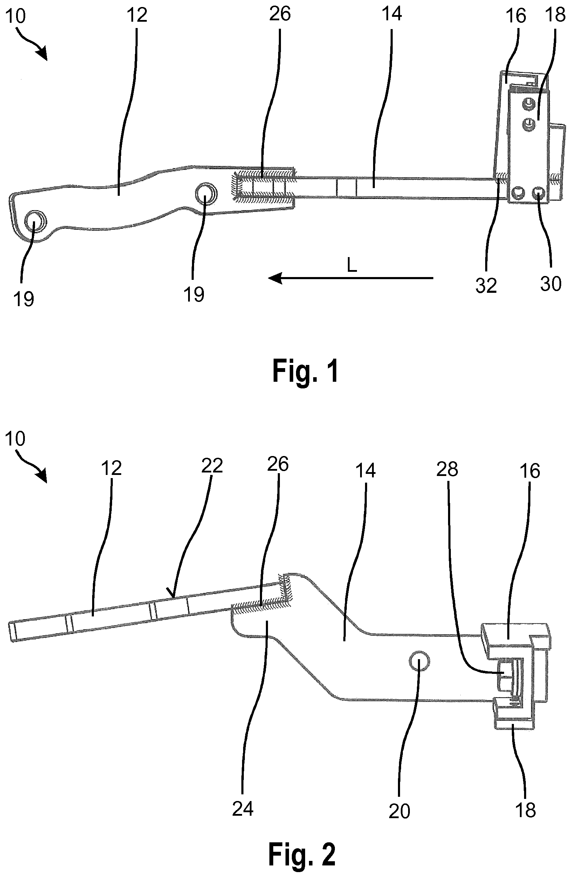

In den Figuren 1 bis 4 ist eine Ausführungsform des erfindungsgemäßen Verstärkungselements zur Entlastung eines Achsschenkels in einem Kraftfahrzeug gezeigt.

Das erfindungsgemäße Verstärkungselement 10 umfasst einen unteren Abschnitt 12, einen oberen Abschnitt 14, einen Kopfabschnitt 16 sowie ein Verschlusselement 18, die aus einem geeigneten Werkstoff gefertigt sind.

Als Werkstoff eignet sich insbesondere Stahl, beispielsweise Stahl S235JR oder Stahl S355J0, sowie Kohlenstofffasern.

Alternativ kann das erfindungsgemäße Verstärkungselement 10 auch ganz oder teilweise aus anderen Werkstoffen bestehen. Beispielsweise bietet Titan bei vergleichbaren mechanischen Eigenschaften eine deutliche Gewichtsreduktion, die vor allem im Motorsport von Bedeutung sein kann.

Das erfindungsgemäße Verstärkungselement 10 weist mehrere Befestigungspunkte 19, 20, 21 auf, mit denen das erfindungsgemäße Verstärkungselement 10 an vorhandenen Befestigungselementen in einem Kraftfahrzeug befestigt werden kann. Die Befestigungspunkte 19, 20, 21 sind als Durchgangslöcher ausgeführt und eigenen sich somit ideal zur Befestigung des erfindungsgemäßen Verstärkungselements 10 mittels Schrauben oder Bolzen.

Am unteren Abschnitt 12 sind zwei Befestigungspunkte 19 angeordnet, während am oberen Abschnitt 14 und am Kopfabschnitt 16 jeweils ein Befestigungsunkt 20, 21 vorgesehen ist.

Die Anzahl, Art und Anordnung der Befestigungspunkte 19, 20, 21 hängt jedoch grundlegend von der individuellen Gestaltung des Kraftfahrzeugs ab. Daher sind die Befestigungspunkte 19, 20, 21 grundsätzlich fahrzeugspezifisch gestaltet.

Der untere Abschnitt 12 und der obere Abschnitt 14 sind geschnittene Flachteile, die mittels Wasserschneiden aus einem Blech ausgeschnitten wurden.

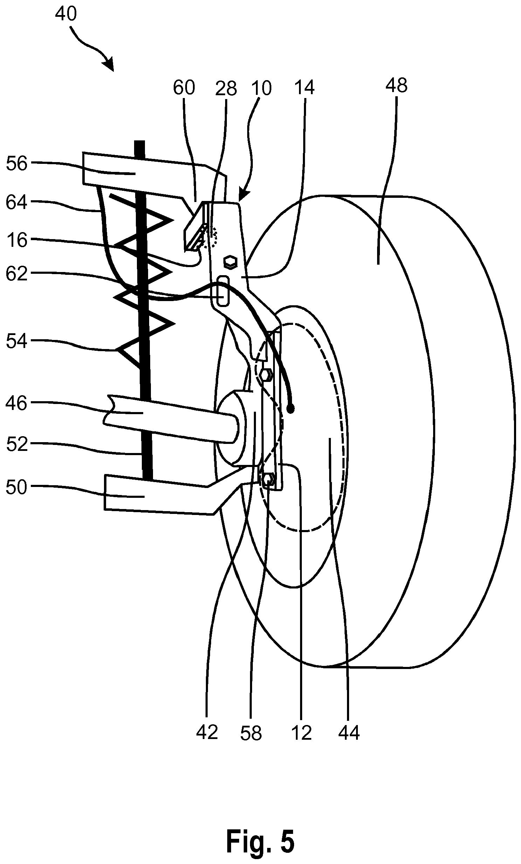

Der untere Abschnitt 12 ist für die Befestigung an einem Bremssattel 44 (siehe Figur 5) vorgesehen und weist daher eine Form sowie eine Montagefläche 22 mit zwei Befestigungspunkten 19 auf, die an den Bremssattel 44 angepasst sind.

Der obere Abschnitt 14 ist schlangenförmig ausgebildet, um eine geeignete Positionierung der Befestigungspunkte 19 zu ermöglichen.

Der untere Abschnitt 12 und der obere Abschnitt 14 sind senkrecht zueinander angeordnet, wobei der obere Abschnitt 14 einen Stützabschnitt 24 aufweist, an dem der untere Abschnitt 12 anliegt. Der Stützabschnitt 24 ist derart gestaltet, dass er den unteren Abschnitt 12 gegen ein Verbiegen abstützt sowie zusätzlich Kräfte in Längsrichtung L besser vom oberen Abschnitt 14 auf den unteren Abschnitt 12 übertragen werden.

Der untere Abschnitt 12 und der obere Abschnitt 14 sind am Stützabschnitt 24 mittels einer ersten Schweißnaht 26 miteinander verschweißt. Durch die Gestaltung des Stützabschnitts 24 wird bei einer Belastung des erfindungsgemäßen Verstärkungselements 10 in Längsrichtung L die erste Schweißnaht 26 entlastet.

Der Kopfabschnitt 16 ist am dem unteren Abschnitt 12 entgegengesetzten Ende am oberen Abschnitt 14 mittels einer zweiten Schweißnaht 32 angeschweißt.

Der Kopfabschnitt 16 ist ein Frästeil, das derart gestaltet ist, dass der im Kopfabschnitt 16 angeordnete Befestigungspunkt 21 die Befestigung einer Schraube (nicht dargestellt) mit einer Mutter 28 ermöglicht, deren axiale Ausrichtung annähernd parallel zur Längsrichtung L ist.

Das Verschlusselement 18 ist eine rechteckige Platte, die eine Verbindung zwischen dem Kopfabschnitt 16 und dem oberen Abschnitt 14 herstellt. Zu diesem Zweck weist das Verschlusselement 18 Bohrungen 30 auf, die zur Verschraubung des Verschlusselements 18 mit dem Kopfabschnitt 16 und dem oberen Abschnitt 14 auf der der zweiten Schweißnaht 32 entgegengesetzten Seite vorgesehen sind.

Der Befestigungspunkt 20 am oberen Abschnitt 14 kann zur Befestigung des Verstärkungselements 10 an vorhandenen Befestigungselementen in einem Kraftfahrzeug vorgesehen sein. Zusätzlich oder alternativ kann der Befestigungspunkt 20 auch beim Zusammenschweißen des erfindungsgemäßen Verstärkungselement zum Fixieren der Bauteile verwendet werden.

Das erfindungsgemäße Verstärkungselement 10 kann fahrzeugtypspezifisch und/oder seitenspezifisch gestaltet sein. Zusätzlich kann auch eine achsspezifische Gestaltung vorgesehen sein.

Insbesondere kann das erfindungsgemäße Verstärkungselement 10 für jeden zu verstärkenden Achsschenkel individuell gestaltet sein.

In einer (nicht dargestellten) Ausführungsform weist das erfindungsgemäße Verstärkungselement 10 einen Code auf, der eine eindeutige Identifizierung des erfindungsgemäßen Verstärkungselements 10 ermöglicht. Dieser Code kann direkt visuell oder mittels mechanischer Hilfsmittel auslesbar sein und insbesondere Ziffern, Buchstaben, Zeichen und Symbole, aber auch optoelektronisch auslesbare Schriften wie Barcodes oder 2D-Codes umfassen.

In Figur 5 ist eine erfindungsgemäße Radaufhängung 40 eines Kraftfahrzeugs mit einem Achsschenkel 42 gezeigt, der durch ein erfindungsgemäßes Verstärkungselement 10 entlastet wird.

Die erfindungsgemäße Radaufhängung 40 umfasst einen am Achsschenkel 42 angeordneten Bremssattel 44 sowie eine durch den Achsschenkel 42 verlaufende Achse 46, an der ein Rad 48 vorgesehen ist.

Der Achsschenkel 42 ist über einen unteren Querlenker 50, an dem ein Stoßdämpfer 52 mit einer Schraubenfeder 54 angeordnet ist, und über einen oberen Querlenker 56 mit dem Kraftfahrzeug verbunden.

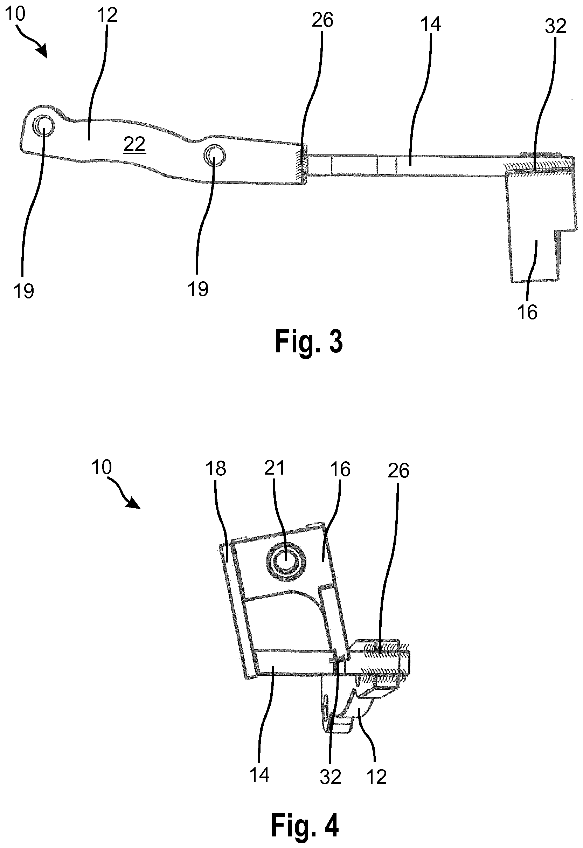

Das erfindungsgemäße Verstärkungselement 10 ist am unteren Abschnitt 12 mit der Montagefläche 22 (siehe Fig. 2 und 3) am Bremssattel 44 angeordnet und an seinen dort vorgesehenen Befestigungspunkten 19 (siehe Fig. 1 und 3) mittels zwei Schrauben 58 an diesem befestigt.

Je nach Gestaltung des Bremssattels 44 können auch mehr oder weniger Schrauben 58 und/oder andere Befestigungsmittel zur Befestigung des erfindungsgemäßen Verstärkungselements 10 am Bremssattel 44 vorgesehen sein.

An seinem Kopfabschnitt 16 ist das erfindungsgemäße Verstärkungselement 10 an dem dort vorgesehenen Befestigungspunkt 21 (siehe Fig. 4) mittels der Mutter 28 an einem Traggelenk 60 des oberen Querlenkers 56 befestigt.

Am oberen Abschnitt 14 des erfindungsgemäßen Verstärkungselements 10 ist eine Befestigung 62 zur sicheren Führung einer Bremsleitung 64 angebracht.

In einer (nicht dargestellten) Ausführungsform weist die erfindungsgemäße Radaufhängung 40 eine Stabilisatoranlenkung auf, an der das erfindungsgemäße Verstärkungselement 10 an einem Befestigungspunkt 19, 20, 21, insbesondere Befestigungspunkt 20, mittels eines oder mehrerer Befestigungsmittel an der Stabilisatoranlenkung befestigt ist.

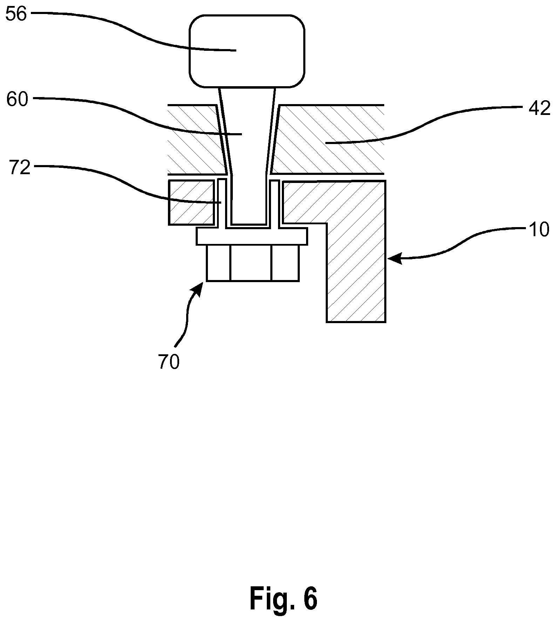

In der Figur 6 ist eine Spezialmutter 70 gezeigt, mittels der das erfindungsgemäße Verstärkungselement 10 am Traggelenk 60 des oberen Querlenkers 56 befestigt ist.

Die Spezialmutter 70 weist einen Gewindeabschnitt 72 auf, der in das Verstärkungselement 10 ragt und dort am Traggelenk 60 befestigt ist, das den Achsschenkel 42 durchgreift.

Das erfindungsgemäße Verstärkungselements 10 und die erfindungsgemäße Radaufhängung 40 sind so gestaltet, dass keine Modifikationen an vorhandenen Teilen im Kraftfahrzeug notwendig sind und dass ein einfacher Einbau möglich ist, d.h. der Einbau kann mit handelsüblichen Werkzeugen erfolgen und auch von Laien, beispielsweise anhand einer anschaulichen Einbauanleitung durchgeführt werden.

Der Einbau benötigt zudem wenig Zeit und kann innerhalb einer Stunde erfolgen.

Dadurch, dass das Verstärkungselement 10 lösbar befestigt ist, kann es im Vergleich zu anderen Verstärkungselementen, die beispielsweise durch Schweißen, Löten, Nieten oder Kleben befestigt sind, wieder einfach entfernt werden. Dies ist insbesondere bei Reparaturen oder bei einer Überstellung des Kraftfahrzeugs in ein Land, in dem solche Verstärkungselemente 10 nicht zugelassen sind, von Vorteil.

Das Verstärkungselement 10 ist insbesondere derart gestaltet, dass es keine negativen Auswirkungen auf vorhandene Teile in der Radaufhängung 40 hat. Dies umfasst, dass im Betrieb des Kraftfahrzeugs das Verstärkungselement 10 keine anderen Teile berührt, außer denjenigen Teilen, an denen das Verstärkungselement 10 befestigt ist. Insbesondere beim Durchfedern der Achse und/oder beim Einschlagen der Räder kommt es hierbei zu keinem Kontakt, der zu einem Verschleiß der Teile führt.

Das Verstärkungselement 10 ist insbesondere zur Entlastung von Achsschenkeln 42 in folgenden Kraftfahrzeugen geeignet: Land-Cruiser Prado J12, Land-Cruiser Prado J15, Land-Cruiser 200 J20, Toyota Hilux, Toyota Fortuner, Toyota 4Runner, Toyota Tacoma, Toyota FJ-Cruiser.

## Patentansprüche

1. Verstärkungselement (10) zur Entlastung eines Achsschenkels (42), der über einen unteren Querlenker (50), an dem ein Stoßdämpfer (52) mit einer Schraubenfeder (54) angeordnet ist, und über einen oberen Querlenker (56) mit einem Kraftfahrzeug verbunden ist, **dadurch gekennzeichnet, dass** das Verstärkungselement (10) Befestigungspunkte (19, 20, 21) aufweist, die zur Befestigung des Verstärkungselements (10) an vorhandenen Befestigungselementen im Kraftfahrzeug vorgesehen sind, wobei die Befestigungspunkte (19, 20, 21) Durchgangslöcher aufweisen, die für die Befestigung des Verstärkungselementes (10) mittels Befestigungsmittel, insbesondere Schrauben vorgesehen sind, wobei das Verstärkungselement (10) am unteren Abschnitt (12) mit einer Montagefläche (22) an einem Bremssattel (44) anordenbar ist und an seinen dort vorgesehenen Befestigungspunkten (19, 20, 21) mittels der ein oder mehreren Befestigungsmittel an diesem befestigbar ist.

2. Verstärkungselement nach Anspruch 1, **dadurch gekennzeichnet, dass** das Verstärkungselement (10) aus Metall, insbesondere Stahl, besteht.

3. Verstärkungselement nach einem der vorhergehenden Ansprüche, **dadurch gekennzeichnet, dass** das Verstärkungselement (10) einen unteren Abschnitt (12), einen oberen Abschnitt (14) und einen Kopfabschnitt (16), die stoffschlüssig miteinander verbunden, insbesondere verschweißt, sind, sowie ein Verschlusselement (18) umfasst, das mit dem oberen Abschnitt (14) und dem Kopfabschnitt (16) verbunden, insbesondere verschraubt, ist.

4. Verstärkungselement nach Anspruch 3, **dadurch gekennzeichnet, dass** der Kopfabschnitt (16) ein Frästeil ist.

5. Verstärkungselement nach Anspruch 3 oder 4, **dadurch gekennzeichnet, dass** der untere Abschnitt (12) und der obere Abschnitt (14) geschnittene Flachteile sind.

6. Verstärkungselement nach Anspruch 5, **dadurch gekennzeichnet, dass** der untere Abschnitt (12) und der obere Abschnitt (14) in einem rechten Winkel zueinander angeordnet sind, und dass der obere Abschnitt (14) einen Stützabschnitt (24) aufweist, an dem der untere Abschnitt (12) anliegt.

7. Verstärkungselement nach einem der vorhergehenden Ansprüche, **dadurch gekennzeichnet, dass** das Verstärkungselement (10) fahrzeugtypspezifisch und/oder seitenspezifisch gestaltet ist.

8. Verstärkungselement nach einem der vorhergehenden Ansprüche, **dadurch gekennzeichnet, dass** ein Code vorgesehen ist, der eine eindeutige Identifizierung des Verstärkungselements (10) ermöglicht.

9. Verstärkungselement nach einem der vorhergehenden Ansprüche, **dadurch gekennzeichnet, dass** eine Befestigung (62) zur Führung einer Bremsleitung (64) vorgesehen ist.

10. Radaufhängung (40) eines Kraftfahrzeugs, mit einem Verstärkungselement (10) nach einem der vorhergehenden Ansprüche, einem Achsschenkel (42), der über einen unteren Querlenker (50), an dem ein Stoßdämpfer (52) mit einer Schraubenfeder (54) angeordnet ist, und über einen oberen Querlenker (56) mit dem Kraftfahrzeug verbunden ist, einem Bremssattel (44) und einem Traggelenk (60), **dadurch gekennzeichnet, dass** das Verstärkungselement (10) derart befestigt ist, dass es den Achsschenkel (42) entlastet, wobei das Verstärkungselement (10) an einer dem Bremssattel (44) zugeordneten Montagefläche (22) ein, zwei, drei oder mehrere Befestigungspunkte (19, 20, 21) aufweist, wobei das Verstärkungselement (10) mittels Befestigungsmittel, insbesondere Schraube am Bremssattel (44) befestigt ist.

11. Radaufhängung nach Anspruch 10, **dadurch gekennzeichnet, dass** das Verstärkungselement (10) mindestens einen Befestigungspunkt (19, 20, 21) am Kopfabschnitt (16) aufweist, an dem das Verstärkungselement (10) mit einem Befestigungsmittel, insbesondere Mutter am Traggelenk (60) befestigt ist.

12. Radaufhängung nach Anspruch 11, **dadurch gekennzeichnet, dass** das Verstärkungselement (10) mittels einer Spezialmutter (70) am Traggelenk (60) befestigt ist.

13. Radaufhängung nach einem der Ansprüche 10 bis 12, **dadurch gekennzeichnet, dass** die Radaufhängung (40) eine Stabilisatoranlenkung umfasst und das Verstärkungselement (10) mindestens einen Befestigungspunkt (19, 20, 21) für die Stabilisatoranlenkung aufweist, wobei das Verstärkungselement (10) mittels Befestigungsmittel, insbesondere Schrauben an der Stabilisatoranlenkung befestigt ist.

## Claims

1. A reinforcing element (10) for relieving the load on a steering knuckle (42) which is connected to a motor vehicle by means of a lower transverse control arm (50) on which a shock absorber (52) with a helical spring (54) is arranged, and by means of an upper transverse control arm (56), **characterized in that** the reinforcing element (10) has fastening points (19, 20, 21) which are provided for fastening the reinforcing element (10) to existing fastening elements in the motor vehicle, the fastening points (19, 20, 21) having through holes which are provided for the fastening of the reinforcing element (10) by means of fastening means, in particular screws or bolts, the reinforcing element (10) being adapted to be arranged at the lower portion (12) by a mounting surface (22) on a brake caliper (44) and being adapted to be fastened to the latter at its fastening points (19, 20, 21) provided there by means of the one or more fastening means.

2. The reinforcing element according to claim 1, **characterized in that** the reinforcing element (10) is made of metal, in particular steel.

3. The reinforcing element according to any of the preceding claims, **characterized in that** the reinforcing element (10) comprises a lower portion (12), an upper portion (14) and a head portion (16) which are connected to each other by an inter-material bond, in particular welded, and a closure element (18) which is connected, in particular screwed or bolted, to the upper portion (14) and the head portion (16).

4. The reinforcing element according to claim 3, **characterized in that** the head portion (16) is a milled part.

5. The reinforcing element according to claim 3 or 4, **characterized in that** the lower portion (12) and the upper portion (14) are cut flat parts.

6. The reinforcing element according to claim 5, **characterized in that** the lower portion (12) and the upper portion (14) are arranged at right angles to each other and **in that** the upper portion (14) includes a supporting portion (24) against which the lower portion (12) rests.

7. The reinforcing element according to any of the preceding claims, **characterized in that** the reinforcing element (10) is configured so as to be vehicle type-specific and/or side-specific.

8. The reinforcing element according to any of the preceding claims, **characterized in that** a code is provided which allows a unique identification of the reinforcing element (10).

9. The reinforcing element according to any of the preceding claims, **characterized in that** a fastener (62) is provided for guiding a brake line (64).

10. A wheel suspension (40) of a motor vehicle, comprising a reinforcing element (10) according to any of the preceding claims, a steering knuckle (42) which is connected to the motor vehicle by means of a lower transverse control arm (50) on which a shock absorber (52) with a helical spring (54) is arranged, and by means of an upper transverse control arm (56), a brake caliper (44), and a supporting joint (60), **characterized in that** the reinforcing element (10) is fastened such that it relieves the load on the steering knuckle (42), the reinforcing element (10) having one, two, three or more fastening points (19, 20, 21) on a mounting surface (22) associated with the brake caliper (44), the reinforcing element (10) being fastened to the brake caliper (44) by means of fastening means, in particular screw or bolt.

11. The wheel suspension according to claim 10, **characterized in that** the reinforcing element (10) has at least one fastening point (19, 20, 21) on the head section (16) at which the reinforcing element (10) is fastened to the supporting joint (60) by a fastening means, in particular a nut.

12. The wheel suspension according to claim 11, **characterized in that** the reinforcing element (10) is fastened to the supporting joint (60) by means of a special nut (70).

13. The wheel suspension according to any of claims 10 to 12, **characterized in that** the wheel suspension (40) comprises a stabiliser connection and the reinforcing element (10) has at least one fastening point (19, 20, 21) for the stabiliser connection, the reinforcing element (10) being fastened to the stabiliser connection by means of fastening means, in particular screws or bolts.

## Revendications

1. Élément de renforcement (10) pour la décharge d'une fusée d'essieu (42) qui est reliée à un véhicule automobile par un bras de suspension inférieur (50), sur lequel un amortisseur (52) est agencé avec un ressort hélicoïdal (54), et par un bras de suspension supérieur (56), **caractérisé en ce que** l'élément de renforcement (10) présente des points de fixation (19, 20, 21) qui sont prévus pour la fixation de l'élément de renforcement (10) sur des éléments de fixation présents dans le véhicule automobile, les points de fixation (19, 20, 21) présentant des trous de passage qui sont prévus pour la fixation de l'élément de renforcement (10) par l'intermédiaire de moyens de fixation, en particulier des vis, l'élément de renforcement (10) étant apte à être agencé sur le tronçon inférieur (12) par une surface de montage (22) sur un étrier de frein (44) et étant apte à être fixé sur celui-ci au niveau de ses points de fixation (19, 20, 21) prévus ici par l'intermédiaire dudit ou de la pluralité de moyens de fixation.

2. Élément de renforcement selon la revendication 1, **caractérisé en ce que** l'élément de renforcement (10) est réalisé en métal, en particulier en acier.

3. Élément de renforcement selon l'une des revendications précédentes, **caractérisé en ce que** l'élément de renforcement (10) comprend un tronçon inférieur (12), un tronçon supérieur (14) et un tronçon de tête (16) lesquels sont reliés, en particulier soudés les uns aux autres par coopération de matières, ainsi qu'un élément de fermeture (18) qui est relié au tronçon supérieur (14) et au tronçon de tête (16), en particulier vissé sur ces derniers.

4. Élément de renforcement selon la revendication 3, **caractérisé en ce que** le tronçon de tête (16) est une pièce fraisée.

5. Élément de renforcement selon la revendication 3 ou 4, **caractérisé en ce que** le tronçon inférieur (12) et le tronçon supérieur (14) sont des pièces planes coupées.

6. Élément de renforcement selon la revendication 5, **caractérisé en ce que** le tronçon inférieur (12) et le tronçon supérieur (14) sont agencés selon un angle droit l'un par rapport à l'autre et **en ce que** le tronçon supérieur (14) présente un tronçon de soutien (24) contre lequel le tronçon inférieur (12) est en appui.

7. Élément de renforcement selon l'une des revendications précédentes, **caractérisé en ce que** l'élément de renforcement (10) est réalisé de manière spécifique au type de véhicule et/ou de manière spécifique au côté.

8. Élément de renforcement selon l'une des revendications précédentes, **caractérisé en ce qu'**il est prévu un code qui permet une identification univoque de l'élément de renforcement (10).

9. Élément de renforcement selon l'une des revendications précédentes, **caractérisé en ce qu'**il est prévu une fixation (62) pour le guidage d'une conduite de frein (64).

10. Suspension (40) d'un véhicule automobile, présentant un élément de renforcement (10) selon l'une des revendications précédentes, une fusée d'essieu (42) qui est reliée au véhicule automobile par un bras de suspension inférieur (50), sur lequel un amortisseur (52) est agencé avec un ressort hélicoïdal (54), et par un bras de suspension supérieur (56), un étrier de frein (44) et un joint de support (60), **caractérisée en ce que** l'élément de renforcement (10) est fixé de manière à décharger la fusée d'essieu (42), l'élément de renforcement (10) présentant un, deux, trois ou plusieurs points de fixation (19, 20, 21) sur une surface de montage (22) associée à l'étrier de frein (44), l'élément de renforcement (10) étant fixé sur l'étrier de frein (44) par l'intermédiaire de moyens de fixation, en particulier des vis.

11. Suspension selon la revendication 10, **caractérisée en ce que** l'élément de renforcement (10) présente au moins un point de fixation (19, 20, 21) sur le tronçon de tête (16) au niveau duquel l'élément de renforcement (10) est fixé sur le joint de support (60) par l'intermédiaire d'un moyen de fixation, en particulier un écrou.

12. Suspension selon la revendication 11, **caractérisée en ce que** l'élément de renforcement (10) est fixé sur joint de support (60) par l'intermédiaire d'un écrou spécial (70).

13. Suspension selon l'une des revendications 10 à 12, **caractérisée en ce que** la suspension (40) comprend une articulation de barre stabilisatrice et **en ce que** l'élément de renforcement (10) présente au moins un point de fixation (19, 20, 21) pour l'articulation de barre stabilisatrice, l'élément de renforcement (10) étant fixé sur l'articulation de barre stabilisatrice par l'intermédiaire de moyens de fixation, en particulier des vis.
